# EUROPEAN PATENT APPLICATION

(11) **EP 1 361 353 A2**
(43) Date of publication of application: **12.11.2003**
(21) Application number: 03009604.4
(22) Date of filing: 29.04.2003
(51) Int. Cl.: F02D 13/02

(54) **An exhaust valve control device for two stroke engine**

(30) Priority: 30.04.2002 IT BO20020248
(71) Applicant: Officine Provini S.a.s. di Provini Tullio Paolo & C., 40033 Casalecchio di Reno (Bologna) (IT)
(72) Inventor: Provini, Tullio Paolo, 40033 Casalecchio di Reno (Bologna) (IT)
(74) Representative: Lanzoni, Luciano

(57) **Abstract**

The invention relates to an exhaust valve control device (1) for two stroke engines, the device (1) comprising a governor (2), elements (3) connecting the governor (2) to an exhaust control valve (4), able to advance or retard opening of the exhaust port, a damper (14) attached to the connecting elements (3). The damper (14) may be a hydraulic shock absorber (15) with adjustable braking.

## Description

The present invention relates to an exhaust valve control device for two stroke engines. More specifically, the present invention relates to improvements in the device which controls opening and closing of the exhaust control valve in high performance two stroke engines, a valve which advances or retards opening and closing of the exhaust port.

An example of these devices is described in patent US-6 273 036. Said patent presents an exhaust control valve assembly, comprising a governor with centrifugal weights and at least one spring which tends to keep the valve in the closed position.

To improve the engine output performance, patent US-6 273 036 proposes that the assembly should be equipped with a spring whose spring constant increases when the exhaust valve is opened. With this solution, each engine speed corresponds to a single, unique exhaust control valve opening position.

Since it depends only on the engine speed, this adjustment is too approximate because it does not take into account many other engine operating variables, and is, in any case, unsatisfactory when significant changes in engine operating speed are required and in the transient state when passing between one speed (number of revolutions per minute) and the other.

Patent US-4 829 945 describes an exhaust control valve actuated by a servomotor, in turn actuated by an electronic control unit. The latter determines a given exhaust control valve opening angle, based on information received from sensors, for example the engine speed, reprocessed according to predetermined mapping.

This solution allows the introduction of more variables for controlling exhaust control valve opening, but complicates construction, makes the device delicate and sensitive to ambient conditions.

In particular, on light vehicles subject to stresses and impacts, such as off-road competition motor vehicles, electronic components should be avoided as far as possible, since they are affected by ambient conditions, requiring particular and specific protection and may also fail to operate in a reliable manner.

An object of the present invention is, therefore, to provide an exhaust valve control device for two stroke engines which is simple, strong and reliable, and which allows exhaust control valve opening or closing with more adjustment possibilities, similar to what could be achieved with an electric actuator and a microprocessor unit or similar.

These adjustment possibilities improve engine operation at transient speeds, in particular when the power and torque developed by the engine exceed the traction possibilities of the vehicle fitted with the engine with the exhaust control valve. This situation is typical of high performance two stroke engines mounted on light vehicles such as competition and similar motor vehicles, in particular for off-road competition motor vehicles. In accordance with one aspect of the present invention, an exhaust valve control device for two stroke engines is presented as defined in claim 1.

The dependent claims refer to preferred and advantageous embodiments of the invention.

The invention will now be described with reference to the accompanying drawings which illustrate preferred non-restricting embodiments and in which:
- Figure 1 is a partial side view of an engine fitted with the exhaust valve control device made in accordance with the present invention;
- Figure 2 is a partial side view of an engine fitted with an alternative embodiment of the exhaust valve control device illustrated in Figure 1;
- Figure 3 is a partial side view of an engine fitted with another embodiment of the exhaust valve control device illustrated in Figure 1;
- Figure 4 is a schematic cross-section of a detail of the exhaust valve control device illustrated in the previous figures;
- Figures 5, 6, 7 and 8 are diagrams relating to operation of the exhaust valve control device illustrated in Figure 1;
- Figures 9, 10 and 11 illustrate alternative embodiments of the detail illustrated in Figure 4.

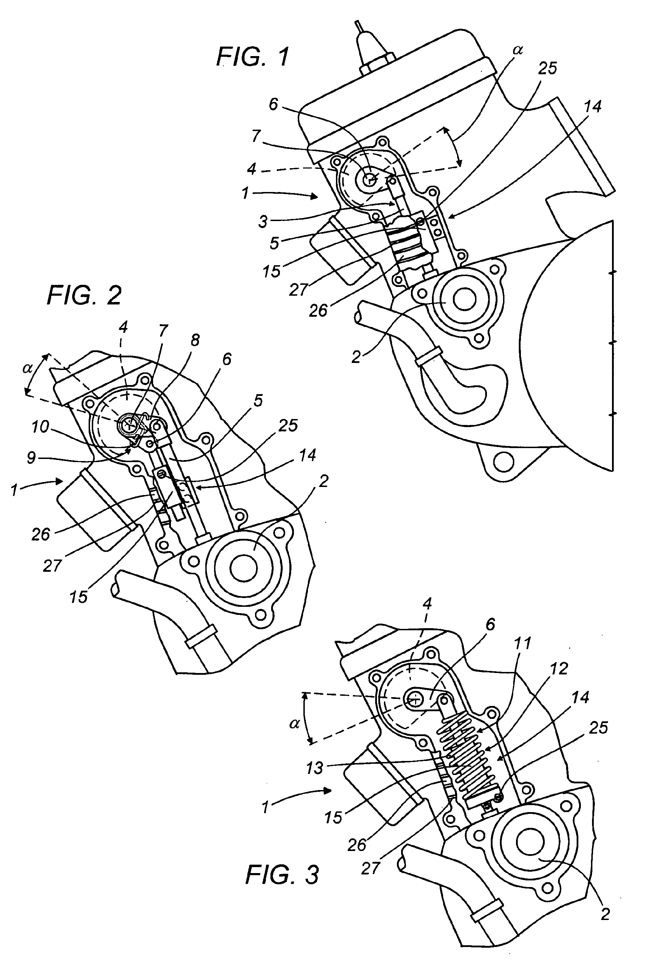

With reference to Figure 1, the exhaust valve control device disclosed is labelled 1 as a whole, and comprises a governor 2, of the known type and therefore not illustrated in detail, connected by mechanical connecting means 3 to an exhaust control valve 4, hereinafter referred to simply as the valve 4, the latter also being of the known type and therefore not illustrated in detail.

As already indicated, this valve 4 advances or delays opening and closing of the exhaust port of two stroke engines.

In Figure 1 the mechanical connecting means 3 are represented by a rigid rod 5, hinged to a first lever 6, in turn directly connected to the valve 4 actuating pin 7.

The governor 2 may be of the type with centrifugal weights, as in the example described in patent US-6 273 036, and has return means, for example a spring, which counters the action of the centrifugal force. However, the present invention is not limited to this type of governor, but may also be applied to any other type of governor: mechanical, pneumatic, electric, etc.

In the embodiment illustrated in Figure 2, the rigid rod 5 actuates a second lever 8 which is connected to the first level 6 by first elastic means 9, shown by way of example as a torsion spring 10 which operates in both directions of rotation.

In the embodiment illustrated in Figure 3, the governor 2 actuates the first lever 6 by means of a yielding rod 11 fitted with second elastic means 12, shown by way of example as a coil spring 13.

In the case illustrated, the spring 13 only operates in compression, that is to say, in a single direction of control - opening or closing - of the exhaust control valve. However, obviously, the spring can also act in both directions of control of the valve 4.

These latter two embodiments have a similar design concept, since in both cases the action of the governor 2 is not directly on the valve 4, but elastic means 9, 12 are inserted in between, so that the valve 4 opens or closes with a given delay and with an opening curve different to the governor 2 command, if the elastic means 9, 12 are active in both directions, or only in opening or closing if the elastic means 9, 12 are only active in one direction.

The exhaust valve control device 1 disclosed may be applied to all of these embodiments, and comprises damper means 14.

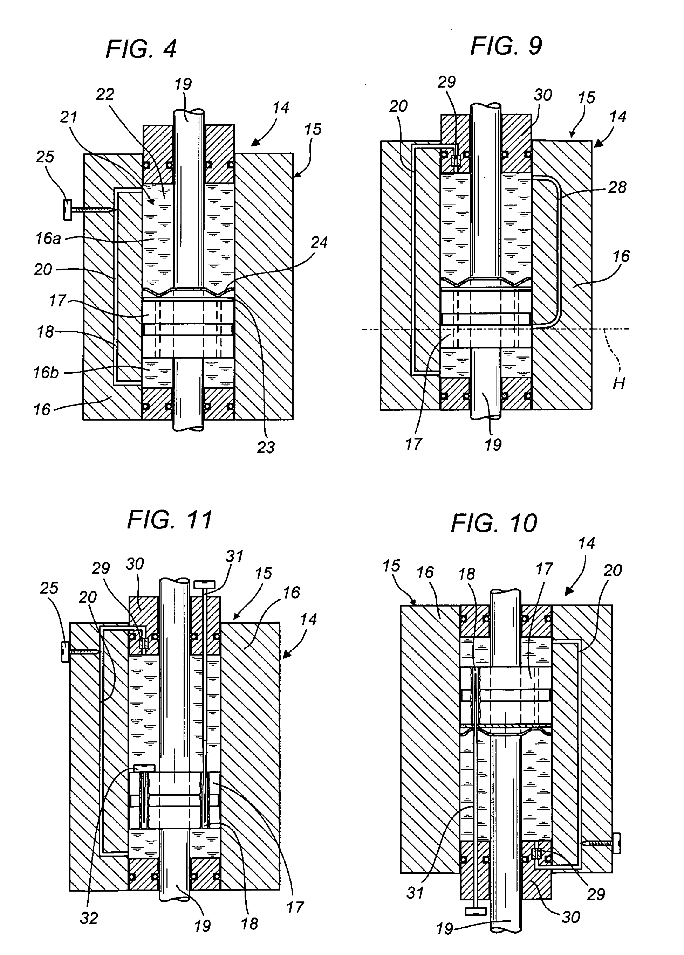

Figure 4 schematically illustrates an embodiment of the damper means 14. In this figure the damper means 14 consist of a linear hydraulic shock absorber 15 with the possibility of adjusting the braking.

Other possible embodiments (not illustrated) of the damper means 14 involve the use of rotary hydraulic shock absorbers attached to the first lever 6 or to the second lever 8, viscostatic shock absorbers or linear or rotary friction shock absorbers, etc.

Overall, although the embodiments of the damper means 14 may vary, the way in which the control device 1 operates remains the same, as becomes clear from the description of its operation which follows.

The adjustable linear hydraulic shock absorber 15 comprises a cylinder 16, a piston 17, with holes 18, sealably sliding in the cylinder 16, a rod 19 attached to the piston 17. The latter divides the entire cylinder 16 into two zones: an upper zone 16a and a lower zone 16b. The rod 19 may be connected to the rigid rod 5 or the yielding rod 11 of the control device 1, or the rod 19 may be integral, that is to say, the piston rod 19 may be the rigid rod 5 or part of the yielding rod 11. In the latter case, as illustrated in Figure 3, the rod 11 practically consists of a coaxial spring 13 - shock absorber 15 assembly.

The cylinder 16 also comprises a duct 20 allowing communication between an upper zone 16a and a lower zone 16b of the cylinder 16. In the embodiment illustrated in Figure 4 the duct 20 is made in the wall of the cylinder 16. However, other embodiments are possible, with the duct 20 in a different position.

The inside of the cylinder 16 is filled with a damper fluid 21, for example hydraulic oil 22. The upper 16a and lower 16b zones are in fluid communication both through the holes 18 in the piston 17 and through the duct 20.

As illustrated in Figure 4, the holes 18 in the piston 17 are closed by a disk 23, which is held in contact with a face of the piston by a Belleville spring 24, whilst the duct 20 is partially closed by a screw with a tapered tip which can be more or less tightened so as to vary the passage cross-section.

This configuration allows the achievement of a different adjustment of shock absorber 15 braking in both directions, as described in more detail below.

In the embodiment illustrated in Figure 9, the cylinder 16 comprises a second duct 28 for the freer passage of the hydraulic oil 22 starting from a given piston 17 position H. The second duct 28 may have an adjusting screw, similarly to the duct 20.

Therefore, a given degree of shock absorber 15 braking may be obtained as far as piston 17 position H, and a different degree of braking, in this case less, from the position H. This clearly shows the versatility of the device 1, which with just a few modifications can change its operating features.

For this purpose, there may also be other configurations, illustrated in Figures 9 to 11.

In Figure 9, in addition to the second duct 28 described above, the cylinder 16 has a modified duct 20. In this case, braking is adjusted by means of a calibrated channel 29 in one of the cylinder 16 closing caps 30. The duct 20 passage cross-section is adjusted by substituting the cap 30 with another, which has a calibrated channel 29 with a different cross-section.

Figure 10 illustrates another embodiment of the hydraulic shock absorber 15 in which inside the cylinder there is a substantially conical needle 31 operating in conjunction with the holes 18, or at least one of the holes 18, or with the only hole 18 in the piston 17. The needle 31 is inserted in one of the cylinder 16 closing caps 30 and may be threaded to change its relative position. The relative position of the needle 31 may also be changed in steps, locking the needle 31 using special grooves (not illustrated) in the needle 31 and an elastic needle fastening peg (not illustrated).

In another embodiment, not illustrated, the needle 31 is positioned in the rod 19 and adjusts the flow of damper fluid passing through a hole (or holes) made in the rod 19.

With these embodiments the passage cross-section of the hole 18 (or holes) is variable with the piston 17 stroke and so the braking applied by the shock absorber 15 is variable.

Figure 11 illustrates another embodiment of the hydraulic shock absorber 15 in which there are another two forms of adjustment of the flow of damper fluid, combined with the previous ones.

In particular, it should be noticed that in the piston 17 there is a screw 32 for adjusting the passage of a hole 18, allowing it to be altered irrespective of the position of the piston 17 stroke. Moreover, in the cylinder 16 internal wall there is another channel in the form of a recess 33 which, by increasing the passage cross-section for a given stretch of the piston 17 stroke, causes a reduction in the degree of hydraulic shock absorber 15 braking for that stretch of the piston 17 stroke.

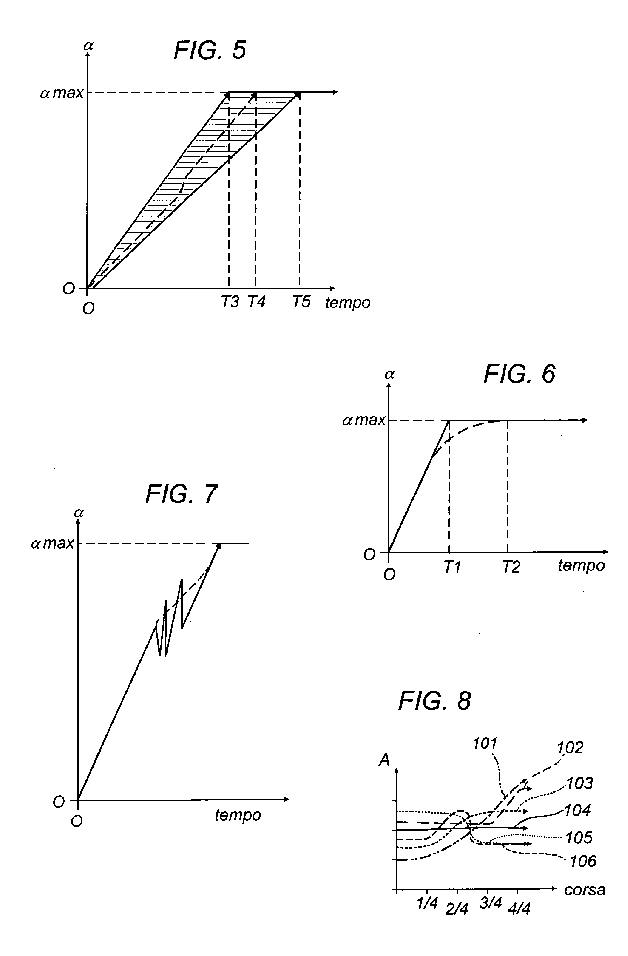

Combining all of these forms of adjustment allows the achievement of variations in the damper fluid passage cross-section summarised by way of example in the diagram in Figure 8.

In this diagram, the "X" axis labelled "stroke" represents the piston 17 stroke, whilst the "Y" axis labelled "A" represents the damper fluid passage cross-section for that piston 17 position.

Obviously the passage cross-section partially determines the flow of damper fluid and, therefore, ultimately, the degree of braking supplied by the shock absorber 15.

Six different curves are illustrated, numbered 101 to 106, whose features may be summarised as follows:
101, gradually increasing flow of damper fluid;
102, flow of damper fluid constant up to 3/4 of the piston 17 stroke, then gradually increasing;
103, flow of damper fluid constant up to 2/4 of the piston 17 stroke, then gradually increasing, then constant again;
104, constant flow of damper fluid;
105, flow of damper fluid constant up to 2/4 of the piston 17 stroke, then gradually falling, then constant again;
106, flow of damper fluid constant up to 2/4 of the piston 17 stroke, gradually increasing and falling in succession, then becoming constant again at almost the starting level.

The outside of the device 1 is protected by a cover 26, partially illustrated in the figures, which may have fins 27 to promote device 1 cooling. The cover 26 and the cylinder 16 may be made as a single piece to promote cooling and simplify construction. The device 1 disclosed operates as follows.

The valve 4 has two main positions: one closed, in which the upper edge of the engine exhaust port is lower, suitable for low speeds, and one open, in which the upper edge of the engine exhaust port is higher, suitable for higher speeds.

The governor 2 determines the position of the valve 4, open or closed, mainly based on the engine speed (number of revolutions).

Most governors use weights - for example ball bearings - subject to centrifugal force, and so determine a single governor position for each engine speed.

Generally speaking, the governor 2 actuates the valve 4 between the two main positions, closed or open, whilst valve 4 intermediate positions are relatively less frequent, partly because the range is relatively narrow in terms of both valve adjustment amplitude and the range of engine speeds (number of revolutions) in which valve 4 adjustment (variation) takes place.

These adjustments determine the engine's maximum power or driving torque.

However, generally transient motor vehicle driving conditions occur in which the maximum power or maximum driving torque are not the best quality required of the engine to achieve maximum motor vehicle acceleration.

This happens particularly in conditions in which there is a low level of grip between the vehicle wheel and the ground, and in any event in conditions in which the driving torque at the wheel exceeds that which can be transmitted.

For these reasons, the engine's maximum power or driving torque must be limited for a given period of time, in particular during the transition between one speed and the other, for example, when switching from a given number of engine revolutions to a higher number of engine revolutions.

This is achieved with the device 1 disclosed, braking the movement of the valve 4 which does not immediately pass from the closed position to the open position (or vice versa).

The movement supplied by the governor 2 to the valve 4 occurs with a gradual and retarded passage due to the braking applied by the shock absorber 15. As already indicated relative to the diagram in Figure 8, the movement can be braked gradually and in a variable manner and may be different during opening and closing. With reference to the shock absorber 15 in Figure 4, it should be noticed that the piston 17 upward movement is braked in the duct 20 passage by adjusting the screw 25, since the disk 23 completely closes the holes 18 in the piston 17. The piston 17 downward movement may be braked relatively little by the disk 23, if the Belleville spring 24 which holds it in contact with the face of the piston 17 is quite yielding so that the disk 23 rises relatively easily, the holes 18 opening easily as a result and allowing an ample flow of damper fluid 21.

By suitably connecting the shock absorber 15 to the valve 4 pin 7, a braked movement can be obtained for valve 4 opening and a relatively free movement for reaching the valve 4 closed position.

In particular, in the examples illustrated in Figures 2 and 3, the braking effect is more obvious because the governor 2 acts through the elastic means 9, 12, and the damper means 14 act directly on the valve 4. In the example in Figure 1, the braking action is less prevalent because the governor 2 acts directly on the valve 4 which is connected by the rigid rod 5.

Device 1 operation is now described in detail relative to the conditions illustrated in the diagrams in Figures 5, 6 and 7.

In these diagrams the "X" axis labelled "time" represents the time which elapses during the change in engine speed, whilst the "Y" axis labelled "α", represents the angle of movement of the valve 4 pin 7.

In other words, "α" represents the degree of valve 4 opening, starting with "α"=0 which corresponds to the valve 4 in the position with the exhaust port closed, up to "α"="α ₘₐₓ" corresponding to the valve 4 in the position with the exhaust port open.

The diagram in Figure 6 illustrates valve 4 opening after a constant increase in the number of engine revolutions. The continuous line represents valve opening without the shock absorber 15 and the dashed line represents valve opening with the shock absorber 15.

In the first case valve 4 opening occurs by passing from "α"=0 and time=0, to a value of "α"="α ₘₐₓ" in a time=T1 (without shock absorber 15). In the second case the value "α"="α ₘₐₓ" is reached in a time=T2 greater than T1 and with a more gradual trend.

As is clearly illustrated by the diagram in Figure 6, the achievement of maximum valve 4 opening no longer depends directly on the number of revolutions, but the valve 4 maximum opening value "α"="α ₘₐₓ" is reached after a given period of time - the difference between T2 and T1 - which depends on the more or less marked braking effect of the shock absorber 15.

The diagram in Figure 5 illustrates valve 4 opening after a constant increase in the number of engine revolutions, and is relative to two different shock absorber 15 braking values. These two different braking values give two different opening curves and two different times T3, T4 for reaching the valve 4 maximum opening value "α"="αₘₐₓ". The area between the two opening curves may be covered by varying the shock absorber 15 braking as illustrated in the examples in Figures 8 to 11. For example, Figure 5 illustrates a third opening curve, indicated with a dashed line, in the middle of the hatched area, which requires a time T5 for reaching the valve 4 maximum opening value "α"="α ₘₐₓ".

It should also be noticed that this curve has an intermediate vertical bend caused by a temporary reduction in the shock absorber 15 braking. This reduction in braking may be obtained by following one of the examples illustrated in Figures 8 to 11. Finally, the diagram in Figure 7 illustrates the valve 4 opening (or closing) curves, as a function of time, following an alternate variation in the number of engine revolutions, followed by a final increase in the number of revolutions. The continuous line represents the variation in the angle "α" without the shock absorber 15, whilst the dashed line represents the variation in the angle "α" with the shock absorber 15.

As can be seen in the diagram in Figure 7, the dashed line curve relative to the device 1 disclosed has a more gradual trend without peaks during valve 4 opening or closing. This also translates into a softer engine power or torque supply, so that the vehicle driver can concentrate on driving and does not have to deal with problems of grip due to excessive power relative to the traction possibilities offered by the type of ground and the tyre fitted on the vehicle.

As is evident from the above description, the device 1 disclosed allows the achievement of improved engine operation in a way similar to that which can be achieved with electric - electronic adjusting means. The device 1 disclosed is also very versatile, since - as illustrated in the examples - very different operating modes can be achieved with small variations in the construction. The invention described can be subject to numerous modifications and variations without thereby departing from the scope of the inventive concept defined in the claims. Moreover, all the details of the invention may be substituted by technically equivalent elements.

### LEGEND

- 1: control device
- 2: governor
- 3: mechanical connecting means
- 4: exhaust valve
- 5: rigid rod
- 6: first lever
- 7: valve 4 actuating pin
- 8: second lever
- 9: first elastic means
- 10: torsion spring
- 11: yielding rod
- 12: second elastic means
- 13: coil spring
- 14: damper means
- 15: linear hydraulic shock absorber
- 16: cylinder
- 16a: upper zone of the cylinder 16
- 16b: lower zone of the cylinder 16
- 17: piston
- 18: holes in piston
- 19: rod
- 20: passage duct
- 21: damper fluid
- 22: hydraulic oil
- 23: disk
- 24: Belleville spring
- 25: adjusting screw
- 26: cover
- 27: cooling fin
- 28: second passage duct
- 29: calibrated channel
- 30: cylinder 16 closing cap
- 31: needle
- 32: adjusting screw for holes 18
- 33: recess in cylinder wall.

## Claims

1. An exhaust valve control device (1) for two stroke engines for vehicle traction, the device (1) comprising a governor (2), means (3) for connecting the governor (2) to an exhaust control valve (4), able to advance or retard opening of the engine exhaust port, the control device being **characterised in that** it comprises damper means (14) attached to the connecting means (3).

2. The control device (1) according to claim 1, **characterised in that** the damper means (14) comprise a hydraulic shock absorber (15) with adjustable braking.

3. The control device (1) according to claim 1 or 2, **characterised in that** the governor (2) connecting means (3) comprise a rigid rod (5).

4. The control device (1) according to claim 1 or 2, **characterised in that** the governor (2) connecting means (3) comprise a yielding rod (11) made using elastic means (9, 12).

5. The control device (1) according to any of the foregoing claims, **characterised in that** the damper means (14) are connected to the valve (4).

6. The control device (1) according to any of the foregoing claims from 2 to 5, **characterised in that** the adjustable hydraulic shock absorber (15) comprises: a cylinder (16); a piston (17) which divides the inside of the cylinder (16) into two zones: one upper (16a) and one lower (16b), the piston (17) having holes (18) in it and sealably sliding in the cylinder (16); there being a rod (19) attached to the piston (17).

7. The control device (1) according to claim 6, **characterised in that** the cylinder (16) comprises a hydraulic passage duct (20) between the upper zone (16a) and the lower zone (16b).

8. The control device (1) according to claim 7, **characterised in that** the duct (20) comprises an adjusting screw (25) for varying the duct (20) passage cross-section.

9. The control device (1) according to claim 7, **characterised in that** the duct (20) comprises a calibrated channel (29) for varying the duct (20) passage cross-section.

10. The control device (1) according to any of the foregoing claims from 6 to 9, **characterised in that** the piston (17) comprises a disk (23) for closing the holes (18) and a Belleville spring (24) which keeps the disk (23) in contact with a face of the piston (17).

11. The control device (1) according to any of the foregoing claims from 6 to 10, **characterised in that** the cylinder (16) comprises a tapered needle (31) fixed to the cylinder (16) and operating in conjunction with at least one of the holes (18) in the piston (17), so as to vary the passage cross-section of at least one of the holes (18) according to the piston (17) stroke.

12. The control device (1) according to any of the foregoing claims from 6 to 11, **characterised in that** the cylinder (16) comprises a second passage duct (28) or a recess (33), forming another damper fluid (21) passage between two parts of the cylinder (16).
